# FASCICULE DE BREVET EUROPEEN

(11) **EP 3 424 375 B1**
(45) Date de publication et mention de la délivrance du brevet: **04.12.2019**
(21) Numéro de dépôt: 18181291.8
(22) Date de dépôt: 02.07.2018
(51) Int. Cl.: A47J 31/42, A47J 42/08

(54) **MACHINE À CAFÉ AUTOMATIQUE AVEC BROYEUR MUNI DE MEULES RÉGLABLES DANS DES POSITIONS INTERMÉDIAIRES**
AUTOMATISCHE KAFFEEMASCHINE MIT MÜHLE, DIE MIT EINEM IN ZWISCHENPOSITIONEN EINSTELLBAREN MAHLWERK AUSGESTATTET IST
AUTOMATIC COFFEE MACHINE WITH GRINDER WITH ADJUSTABLE WHEELS IN INTERMEDIATE POSITIONS

(30) Priorité: 05.07.2017 FR 1756339
(43) Date de publication de la demande: 09.01.2019
(73) Titulaire: SEB S.A., 69130 Ecully (FR)
(72) Inventeur: EVRARD, Yoann, 53950 LOUVERNE (FR); LE GOUEFF, Ronan, 53000 LAVAL (FR)
(74) Mandataire: Bourrières, Patrice

(56) Documents cités:
- EP-A1- 1 466 547
- WO-A1-2009/010190
- CN-B- 103 799 878
- FR-A1- 2 543 814
- GB-A- 2 463 900
- US-B2- 7 984 868

## Description

### Domaine technique

La présente invention concerne une machine à café automatique qui comprend un broyeur conçu pour moudre les grains de café selon différentes grosseurs afin de permettre la préparation de différents types de boissons à base de café, par exemple un expresso, un cappuccino ou un café long.

L'invention vise tout particulièrement à permettre un réglage précis du broyeur selon plusieurs positions afin que l'utilisateur puisse ajuster la granulométrie de la mouture de café en fonction de ses goûts et du type de boisson à préparer et reproduire à chaque fois une préparation identique d'une même boisson.

### Etat de la technique

Les machines à café automatiques équipées d'un broyeur réglable sont déjà connues de l'homme du métier. Le broyeur se compose traditionnellement de deux meules espacées entre elles. L'une des meules est montée mobile en rotation de sorte à forcer le passage des grains de café entre ces meules, ce qui permet de les broyer et d'obtenir une mouture de café ; l'autre meule est montée mobile en translation de sorte à régler l'espacement entre les deux meules, ce qui permet d'affiner plus ou moins le broyage des grains de café et, ainsi, la granulométrie de la mouture de café. Un dispositif de réglage permet en outre de modifier l'espacement entre les deux meules.

De telles machines sont décrites dans les documents FR2543814A1, FR2732208A1, US7984868, EP2107879A1 et CN104172946A.

Dans la demande de brevet FR2732208A1, le dispositif de réglage comporte une butée basse de référence, selon laquelle les meules viennent en appui l'une sur l'autre. Le dispositif de réglage comporte un capteur de mesure du taux d'humidité entre les deux meules. Ce dispositif de réglage détermine la position d'arrêt de la meule mobile en translation en comparant la mesure de la tension à celle mesurée en position de butée basse et en fonction de la mesure du taux d'humidité entre les deux meules.

Dans le brevet US7984868, le dispositif de réglage mesure une position basse de référence correspondant aux meules en appui l'une contre l'autre ; cette mesure est réalisée grâce à un capteur de charge détectant une résistance au contact des deux meules. Un contrôleur détermine ensuite la position de réglage de la meule mobile en translation par rapport à la position basse de référence, grâce à des capteurs de position.

Dans la demande de brevet EP2107879A1, le dispositif de réglage comprend une unité de contrôle et un dispositif de détection de la position relative entre les deux meules, le dispositif de détection étant du type potentiomètre, extensomètre ou codeur de position.

Dans la demande de brevet CN104172946 A, le dispositif de réglage comporte des butées de type interrupteur correspondant avec des positions de réglage déterminées de l'espacement entre les deux meules.

### Résumé de l'invention

La présente invention a pour objectif de mettre en œuvre une machine à café automatique de conception simple, qui permet le réglage avec précision de plusieurs positions d'espacement entre les meules du broyeur, tout en garantissant la reproductibilité de ces réglages à chaque utilisation. Ainsi, l'utilisateur peut adapter la machine à café pour préparer des boissons en fonction de ses goûts et reproduire à chaque utilisation des boissons identiques, avec les mêmes saveurs.

A cet effet, l'invention concerne une machine à café automatique qui comprend un broyeur comportant deux meules dont l'une est mobile en rotation par rapport à l'autre. La machine comprend également un dispositif de réglage de l'espacement entre les deux meules qui comporte un moteur réversible et un système de transmission configuré pour translater l'une des meules dans un sens ou dans l'autre sous l'action du moteur, d'une position de butée basse correspondant à un espacement minimum des meules permettant par exemple d'obtenir une position de granulométrie très fine de la mouture de café, à une position de butée haute correspondant à un espacement maximum des meules permettant par exemple d'obtenir une granulométrie grossière de la mouture de café.

Selon l'invention, le dispositif de réglage est configuré pour régler l'espacement des meules dans au moins deux positions intermédiaires, permettant par exemple d'obtenir des granulométries fine et moyenne de la mouture de café, en complément des granulométries très fine et grossière précitées. En outre, le dispositif de réglage comprend un module de gestion configuré pour alimenter le moteur jusqu'à atteindre une des positions de butée basse ou haute, puis pour alimenter le moteur durant un temps déterminé permettant d'atteindre une des positions intermédiaires choisie par l'utilisateur.

L'alimentation du moteur permet sa rotation dans un sens ou dans l'autre selon la polarité du courant alimentant ledit moteur. Cette rotation s'effectue à vitesse constante, ce qui permet au système de transmission de déplacer à vitesse constante la meule mobile en translation. Le passage par une des positions de butée basse ou haute permet d'utiliser celle-ci comme position de référence, ce qui garantit ensuite un positionnement de la meule mobile en translation dans l'une des positions intermédiaires, du fait de l'alimentation du moteur pendant un temps déterminé en rapport avec ladite position intermédiaire. Ce positionnement est reproduit précisément à chaque utilisation étant donné qu'il est basé sur un temps déterminé de déplacement depuis l'une des positions de butée basse ou haute.

Selon une réalisation de la machine, le module de gestion est configuré pour que, lors d'un réglage des meules d'une position intermédiaire dans laquelle se situe le broyeur au démarrage, vers une autre position intermédiaire choisie par l'utilisateur, le moteur soit alimenté pour atteindre la position de butée basse ou haute la plus proche de la position intermédiaire à atteindre au final. Ainsi, selon la position intermédiaire à atteindre, le module de gestion détermine la position de référence qui sera soit la position de butée basse soit la position de butée haute. Cela permet de minimiser le temps total de déplacement de la meule mobile en translation jusqu'à sa position finale. On pourrait cependant envisager une variante selon laquelle la meule mobile en translation se déplace systématiquement soit en position de butée basse soit en position de butée haute, quelle que soit la position intermédiaire à atteindre au final.

Selon l'invention, la machine comprend une unité de commande électronique configurée pour commander le dispositif de réglage et son module de gestion.

Selon une réalisation de l'unité de commande, celle-ci est configurée pour réaliser des recettes Expresso et des recettes Café, le dispositif de réglage réglant par défaut l'espacement des meules en position de butée basse pour les recettes Expresso et en position de butée haute pour les recettes Café.

Selon une réalisation de l'unité de commande, celle-ci est configurée pour réaliser des recettes préférentielles auxquelles correspondent des positions de réglage de l'espacement des meules définies par l'utilisateur. Ces positions définies de réglage sont choisies parmi les positions de butée basse et haute et les positions intermédiaires. L'utilisateur peut par exemple choisir la position de butée basse et une position intermédiaire, une position intermédiaire et la position de butée haute, voire une première position intermédiaire et une seconde position intermédiaire. En outre, l'unité de commande est configurée pour commander par défaut le dispositif de réglage de sorte à régler l'espacement des meules dans lesdites positions définies.

Selon une réalisation de la machine, le système de transmission comprend une vis sans fin entraînée en rotation par le moteur, une roue dentée engrenant avec la vis sans fin et entraînant une couronne externe (ou, à l'inverse, une couronne interne) qui reçoit une couronne interne (ou, à l'inverse, une couronne externe) assujettie à la meule mobile en translation, lesdites couronnes étant configurées pour que la rotation de la vis sans fin génère la translation de la couronne interne (ou, à l'inverse, de la couronne externe) le long de la couronne externe (ou, à l'inverse, de la couronne interne).

Selon une réalisation de la machine, les positions de butée basse et haute sont constituées par deux butées mécaniques venant en contact sur au moins un élément de blocage dans lesdites positions. En outre, le dispositif de réglage comprend un système de mesure du courant d'alimentation du moteur, le module de gestion détectant les positions de butée basse et haute lorsqu'un pic de courant est mesuré par le système de mesure et en fonction de la polarité du courant. Ce pic de courant intervient lorsque la meule mobile en translation est bloquée du fait que l'une des butées mécaniques entre en contact avec l'au moins un élément de blocage. On pourrait envisager des variantes de réalisation mettant en œuvre des systèmes de détection des positions de butée basse et haute, par exemple des capteurs de présence.

Selon une réalisation de la machine, les au moins deux positions intermédiaires sont définies par une segmentation constante de la durée totale de déplacement depuis la position de butée basse jusqu'à la position de butée haute. Cela permet d'avoir un pas régulier de déplacement de la meule mobile en translation.

Selon une réalisation préférentielle de la machine, celle-ci comprend uniquement deux positions intermédiaires. On pourrait toutefois envisager une variante avec trois ou quatre positions intermédiaires, selon la course de déplacement envisagée sur la machine entre la position de butée basse et la position de butée haute.

Selon cette réalisation préférentielle de la machine, avec une segmentation constante de la durée totale de déplacement de la position de butée basse à la position de butée haute et lors d'un déplacement d'une position intermédiaire à l'autre position intermédiaire, le moteur est alimenté pendant un temps de l'ordre d'une demi-seconde pour un déplacement de la position de butée basse ou haute la plus proche de la position intermédiaire à atteindre au final, jusqu'à ladite position intermédiaire.

Selon une réalisation de la machine, dans le cadre d'une segmentation constante telle que précitée, le module de gestion intègre une séquence d'apprentissage du temps d'alimentation du moteur entre deux positions successives. Ce temps d'alimentation Ta est égal au temps de déplacement Tp entre la position de butée basse et la position de butée haute que divise le nombre total N de positions intermédiaires auquel on ajoute un, soit Ta=Tp/(N+1).

De préférence, selon cette réalisation précitée de la machine, le module de gestion est configuré pour lancer la séquence d'apprentissage selon un cadencement programmé. Le cadencement peut être, par exemple, un nombre de cycles de broyage réalisés. Ce lancement de la séquence d'apprentissage peut être réalisé automatiquement ou après confirmation de l'utilisateur qui est informé par la machine de la nécessité de lancer ladite séquence d'apprentissage.

### Brève description des figures

Les caractéristiques et avantages de l'invention apparaîtront à la lecture de la description suivante s'appuyant sur des figures, parmi lesquelles :
- la figure 1 illustre une vue d'ensemble de la machine à café automatique ;
- la figure 2 illustre une vue d'ensemble du broyeur et du dispositif de réglage ;
- la figure 3 illustre en une vue de dessus le système de transmission dans une position selon laquelle le broyeur est en position de butée basse ;
- la figure 4 illustre en vue de dessus le système de transmission dans une position selon laquelle le broyeur est en position de butée haute ;
- la figure 5 illustre en coupe le broyeur et met en évidence notamment les deux meules et le système de transmission ;
- La figure 6 schématise quatre positions de réglage du broyeur et une manière préférentielle de gestion du déplacement de la meule mobile en translation selon certaines positions.

### Description détaillée

Dans la suite de la description, le terme machine est utilisé pour définir la machine à café automatique objet de l'invention.

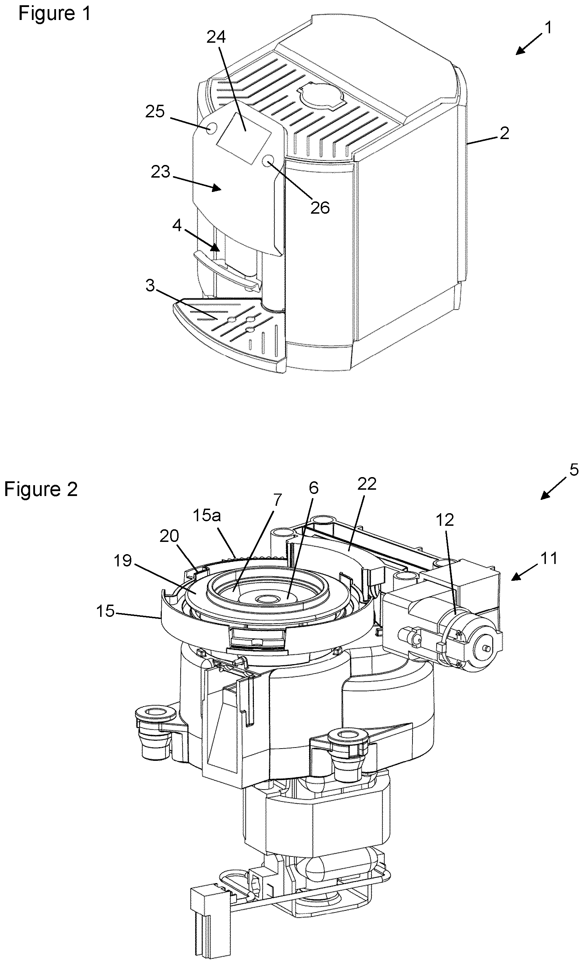

Sur la figure 1 est illustrée une réalisation de la machine 1 qui comprend traditionnellement un corps 2, un support de tasse 3 et un dispositif de distribution de boissons 4 qui, de préférence, dispose notamment de deux buses de distribution de café, d'une buse de distribution de vapeur et d'un système de nettoyage de la buse vapeur. Une telle buse de distribution de vapeur permet la réalisation d'un lait moussé entrant dans la préparation de boissons à base de café, par exemple un Cappuccino. L'objet de l'invention portant tout particulièrement sur le broyage des grains de café, le dispositif de distribution de boissons 4 n'est pas détaillé ci-après. Toutefois, l'homme du métier pourra se référer à la demande de brevet FR2929089A1 qui décrit des caractéristiques d'une machine à café automatique pouvant être reproduites, voire perfectionnées, sur la machine 1 objet de l'invention.

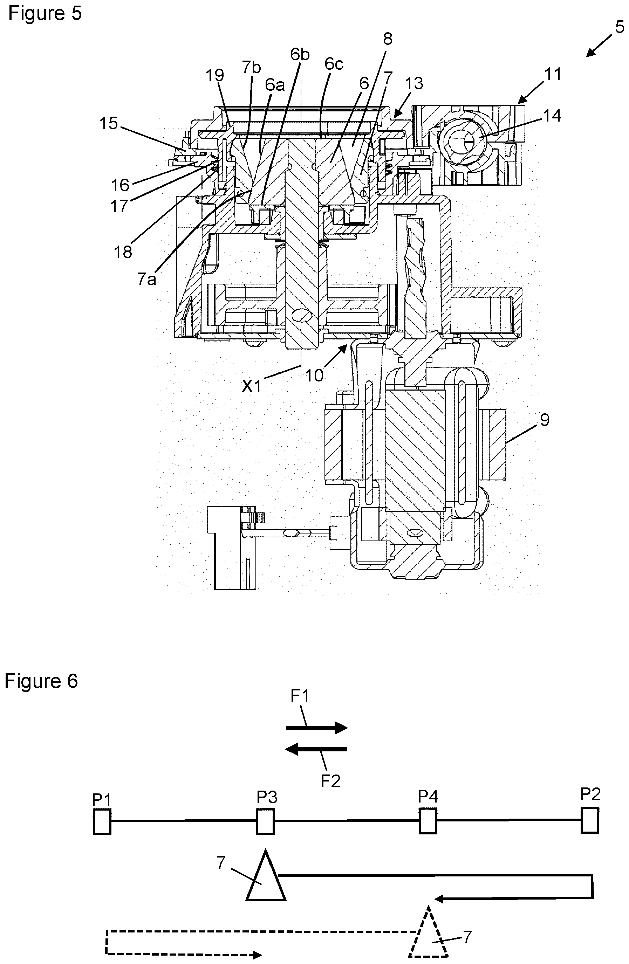

Tel qu'illustré sur les figures 2 à 5, la machine 1 comprend un broyeur 5 qui est agencé à l'intérieur du corps 2. Ce broyeur 5 comprend une première meule 6 et une seconde meule 7 dans laquelle est engagée ladite première meule 6. La première meule 6 comporte une paroi 6a de forme conique orientée vers le haut, c'est-à-dire avec la grande base 6b disposée du côté inférieur et la petite base 6c disposée du côté supérieur, comme l'illustre la figure 5. La seconde meule 7 comprend une première paroi 7a de forme conique orientée vers le haut et une seconde paroi 7b de forme conique orientée vers le bas par rapport à la première paroi 7a, comme l'illustre la figure 5. La seconde paroi 7b forme avec la paroi 6a de la première meule 6 une zone de réception 8 en forme d'entonnoir dans laquelle sont disposés les grains de café, tandis que la première paroi 7a est espacée de quelques centièmes de microns par rapport à la paroi 6a de la première meule 6, cet espacement pouvant être modifié. De préférence, l'espacement varie entre 100 µm et 400 µm.

La première meule 6 est entraînée en rotation selon un axe X1 au moyen d'un premier moteur 9 et d'un système de transmission 10 de type pignon et roue dentée, comme l'illustre la figure 5. Cette rotation permet le broyage des grains de café dans l'espacement (non illustré en détail) généré entre la première paroi 7a de la seconde meule 7 et la paroi 6a de la première meule 6.

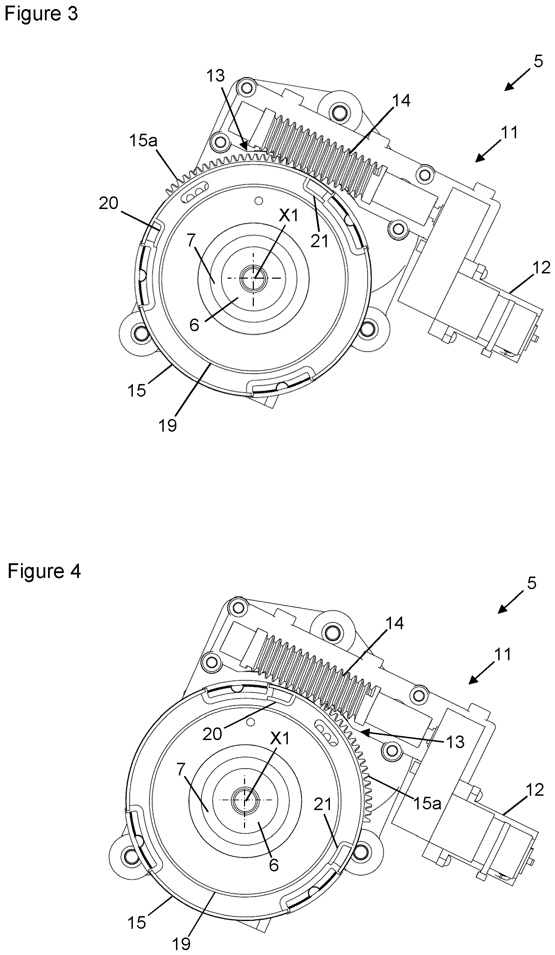

La seconde meule 7 est entrainée en translation dans le sens de l'axe X1 au moyen d'un dispositif de réglage 11, illustré sur les figures 3 à 5, qui comprend un second moteur 12 à double sens de rotation et un système de transmission 13, cette translation permettant de modifier l'espacement entre la première paroi 7a de la seconde meule 7 et la paroi 6a de la première meule 6. Le déplacement de la seconde meule 7 s'effectue à vitesse constante lors de l'alimentation du second moteur 12.

Le système de transmission 13 comprend une vis sans fin 14 qui est entraînée par le moteur 12 et qui engrène avec une portion dentée 15a d'une roue 15, comme l'illustrent les figures 3 et 4. Tel que l'illustre la figure 5, cette roue 15 est montée en rotation selon l'axe X1 et est assujettie à une couronne externe 16 munie d'un taraudage 17 qui reçoit un filetage 18 d'une couronne interne 19. Cette couronne interne 19 est montée en liaison glissière selon l'axe X1 et est assujettie à la seconde meule 7. Ainsi, la rotation de la vis sans fin 14 permet d'entraîner la translation de la seconde meule 7 selon l'axe X1. Le second moteur 12 est à double sens de rotation, ce qui permet soit de faire monter la seconde meule 7 pour augmenter l'espacement entre la première paroi 7a et la paroi 6a de la première meule 6, soit de faire descendre la seconde meule 7 pour réduire ledit espacement.

Le dispositif de réglage 11 comprend également un module de gestion (non illustré) qui est programmé pour agir sur le second moteur 12 afin de gérer le déplacement de la seconde meule 7 dans un sens ou dans l'autre selon quatre positions P1, P2, P3 et P4 schématisées en figure 6. Le sens de déplacement de la seconde meule 7 dépend du sens de rotation du second moteur 12. La première position P1 correspond à une position de butée basse selon laquelle ledit espacement est minimal et permet d'obtenir une mouture très fine lors du broyage des grains de café. La seconde position P2 correspond à une position de butée haute selon laquelle ledit espacement est maximal et permet d'obtenir une mouture grossière lors du broyage des grains de café. La position P3 est une première position intermédiaire selon laquelle ledit espacement permet d'obtenir une mouture fine lors du broyage des grains de café. La position P4 est une seconde position intermédiaire selon laquelle ledit espacement permet d'obtenir une mouture moyenne lors du broyage des grains de café.

Le module de gestion détecte la présence de la seconde meule 7 dans la position P1 ou dans la position P2 grâce à la présence de deux butées mécaniques 20, 21 agencées sur la roue 15, comme l'illustrent les figures 3 et 4. Ces butées mécaniques 20, 21 viennent en appui contre un élément de blocage 22 agencé sur la machine 1 lorsque lesdites position P1 et P2 respectives sont atteintes, ce qui bloque la rotation de la roue 15 et génère une augmentation du courant d'alimentation du second moteur 12. On pourrait prévoir une variante avec deux éléments de blocage distincts. Un capteur de mesure du courant (non illustré) transmet les données de mesure du courant alimentant le second moteur 12 au module de gestion qui détecte lorsqu'un pic de courant se produit et traduit celui-ci en position P1 ou P2, selon la polarité du courant dont dépend le sens de rotation du moteur 12.

Les positions intermédiaires P3 et P4 sont définies par le module de gestion qui gère le temps d'alimentation Ta du second moteur 12 et la polarité du courant alimentant ledit moteur 12, afin d'atteindre lesdites positions intermédiaires P3, P4. Ce temps d'alimentation Ta du second moteur 12 est fixé par le module de gestion qui procède à une segmentation constante du temps de déplacement Tp de la seconde meule 7 de la position P1 à la position P2. Ce temps d'alimentation Ta est donc égal au temps de déplacement Tp que divise le nombre de positions intermédiaires N incrémenté de un. Soit : Ta=Tp/(N+1). Dans le cas d'espèce où le nombre de positions intermédiaires P3, P4 est égal à deux, Ta=Tp/3.

On comprend que des variantes de machines 1 selon l'invention avec plus de deux positions intermédiaires sont envisageables. Par exemple, pour une machine 1 avec trois positions intermédiaires, le temps d'alimentation Ta=Tp/4.

Dans une réalisation préférentielle de la machine 1, le module de gestion est programmé pour lancer une séquence d'apprentissage du temps d'alimentation Ta du second moteur 12 entre deux positions successives. Cela permet de réajuster automatiquement et régulièrement les positions intermédiaires P3 et P4 qui pourraient dévier légèrement dans le temps du fait de la fatigue des pièces du système de transmission 13, des butées mécaniques 20,21, de l'élément de blocage 22 et du second moteur 12.

Dans une réalisation préférentielle de la machine 1, avec deux positions intermédiaires P3 et P4, l'espacement entre la première paroi 7a de la seconde meule 7 et la paroi 6a de la première meule 6 est minimal et égal à 300 µm dans la position P1 et il est maximal et égal à 600 µm dans la position P2. En outre, le temps de déplacement Tp est de l'ordre de 1,5 secondes et le temps d'alimentation Ta est par conséquent de l'ordre de 0,5 seconde.

Ce temps de déplacement Tp dépend de la distance séparant les positions P1 et P2 et de la vitesse de déplacement de la seconde meule 7, laquelle est constante. On pourra donc jouer sur les paramètres de la machine 1, notamment sur la vitesse du second moteur 12 et sur le dimensionnement du système de transmission 13, pour modifier le temps de déplacement Tp et le temps d'alimentation Ta.

Le module de gestion est programmé pour déplacer la seconde meule 7 selon une séquence déterminée qui dépend de la position initiale de ladite meule 7, connue dudit module, et de la position finale que cette meule 7 doit atteindre. En regard de la figure 6, lorsque la seconde meule 7 est initialement dans la position P1 et que le déplacement final est P3 ou P4, le module de gestion alimente le second moteur 12 pour déplacer ladite meule 7 dans le sens de la flèche F1 pendant un temps d'alimentation T1 qui est égal respectivement à une ou deux fois le temps d'alimentation Ta précité. Lorsque la seconde meule 7 est initialement dans la position P2 et que le déplacement final est P4 ou P3, le module de gestion alimente le second moteur 12 en sens inverse pour déplacer ladite meule 7 dans le sens de la flèche F2 pendant un temps d'alimentation T2 qui est égal respectivement à une ou deux fois le temps d'alimentation Ta précité. Lorsque la position initiale est une des deux positions P1 ou P2 et que la position finale est l'autre des positions P2 ou P1, le module de gestion alimente le second moteur 12 dans le sens voulu jusqu'à atteindre ladite position finale qui est détectée par le module de gestion grâce au pic du courant, tel que cela est expliqué précédemment. Lorsque la position initiale est une des deux positions intermédiaires P3 ou P4 et que la position finale est l'une des positions P1 ou P2, le module de gestion alimente le second moteur 12 dans le sens voulu jusqu'à atteindre ladite position finale qui est détectée par le module de gestion du fait d'un pic du courant, comme précédemment.

Lorsque le déplacement s'effectue d'une position intermédiaire à l'autre, c'est-à-dire que la position initiale est la position P3 ou P4 et la position finale est la position P4 ou P3, le module de gestion déplace la seconde meule 7 selon une séquence permettant de limiter le temps total d'activation du moteur 12. Comme l'illustre la figure 6, lorsque la position initiale est la position P3, le module de gestion alimente le moteur 12 pour déplacer la seconde meule 7 dans le sens de la flèche F1 jusqu'à atteindre la position P2 qui est la plus proche de la positon P4 finale, ledit déplacement s'effectuant jusqu'à ce que le module de gestion détecte le pic de courant, comme expliqué précédemment. Puis le module de gestion alimente le moteur 12 en sens inverse pour déplacer la meule 7 dans le sens de la flèche F2 pendant le temps d'alimentation Ta défini précédemment, permettant ainsi d'atteindre la position P4. Inversement, lorsque la position initiale est la position P4, le module de gestion alimente le moteur 12 pour déplacer la seconde meule 7 dans le sens de la flèche F2 jusqu'à atteindre la position P1 qui est la plus proche de la positon P3 finale, ledit déplacement s'effectuant jusqu'à ce que le module de gestion détecte le pic de courant. Puis le module de gestion alimente le moteur 12 en sens inverse pour déplacer la meule 7 dans le sens de la flèche F1 pendant le temps d'alimentation Ta défini précédemment, permettant ainsi d'atteindre la position P3.

Il est possible, en variante, de programmer le module de gestion pour que, lorsque le déplacement s'effectue d'une position intermédiaire à l'autre comme précité, ledit module de gestion alimente systématiquement le moteur 12 pour déplacer la seconde meule 7 depuis sa position initiale P3 ou P4, soit dans le sens de la flèche F1 jusqu'à atteindre la position P1, soit dans le sens de la flèche F2 jusqu'à atteindre la position P2, ledit déplacement s'effectuant jusqu'à ce que le module de gestion détecte le pic de courant, comme expliqué précédemment. On comprend dans ce cas qu'une seule des deux positions P1 et P2 est utilisée comme référence pour déplacer la seconde meule 7 jusqu'à sa position P4 ou P3 à atteindre, le module de gestion alimentant le moteur pendant une durée égale à une ou deux fois (selon le cas) le temps d'alimentation Ta défini précédemment.

La machine 1 comprend une unité de commande électronique 23 comportant notamment un écran de visualisation 24 des programmes de préparation de boissons à base de café, des boutons de commande 25, 26 et une carte électronique (non illustrée) qui intègre le module de gestion du dispositif de réglage 11 et agit sur celui-ci afin de lancer une recette de boisson à base de café sélectionnée par l'utilisateur, pour laquelle correspond une position de la seconde meule 7 définie parmi les positions P1, P2, P3 et P4. Pour cela, la carte électronique intègre un module de gestion des recettes de boisson à base de café qui, par défaut, est programmé pour réaliser des recettes Expresso et des recettes Grand Café en plaçant la seconde meule 7 respectivement en position P1 et en position P2. L'utilisateur peut toutefois définir des recettes préférentielles parmi les quatre positions P1, P2, P3 et P4 et programmer en conséquence le module de gestion des recettes au moyen des boutons de commande 25, 26 et de l'écran de visualisation 24. Dans ce cas, l'unité de commande électronique 23 lancera par défaut ces recettes préférentielles programmées par l'utilisateur lors de la préparation des boissons. Par exemple, l'utilisateur pourra définir de réaliser un Expresso en réglant la seconde meule 7 en position P1 ou en position P3 et définir de réaliser un Grand Café en réglant ladite meule 7 en position P4 ou en position P2.

Les caractéristiques décrites précédemment ne sont pas limitatives, des variantes de machines 1 selon l'invention pouvant être envisagées. On pourrait notamment prévoir des variantes avec plus de deux positions intermédiaires entre les positions de butée basse (position P1) et haute (position P2), en particulier dans des cas où la variation de l'espacement entre les deux meules 6, 7, entre sa valeur minimale (en position P1) et sa valeur maximale (en position P2) est supérieure à 300 µm.

## Revendications

1. Machine (1) à café automatique comprenant un broyeur (5) comportant deux meules (6, 7) dont l'une est mobile en rotation par rapport à l'autre, un dispositif de réglage (11) de l'espacement entre les deux meules comportant un moteur (12) réversible et un système de transmission (13) configuré pour translater l'une (7) des meules dans un sens ou dans l'autre sous l'action du moteur d'une position de butée basse (P1) correspondant à l'espacement minimum des meule à une position de butée haute (P2) correspondant à l'espacement maximum des meules, **caractérisé en ce que** le dispositif de réglage est configuré pour régler l'espacement desdites meules selon au moins deux positions intermédiaires (P3, P4), ledit dispositif de réglage (11) comprenant un module de gestion configuré pour alimenter le moteur (12) jusqu'à atteindre l'une des positions de butée basse (P1) ou haute (P2) puis pour alimenter le moteur durant un temps déterminé permettant d'atteindre une des deux positions intermédiaires (P3, P4) choisie par l'utilisateur.

2. Machine (1) selon la revendication 1, dans laquelle le module de gestion est configuré pour que, lors d'un réglage des meules (6, 7) d'une position intermédiaire (P3, P4) vers une autre position intermédiaire (P4, P3) choisie par l'utilisateur, le moteur (12) soit alimenté pour atteindre la position de butée basse (P1) ou haute (P2) la plus proche de la position intermédiaire (P3, P4) à atteindre.

3. Machine (1) selon l'une des revendications 1 ou 2, laquelle comprend une unité de commande électronique configurée pour commander le dispositif de réglage (11) et son module de gestion.

4. Machine (1) selon la revendication 3, dans laquelle l'unité de commande est configurée pour réaliser des recettes Expresso et des recettes Café, le dispositif de réglage (11) réglant par défaut l'espacement des meules (6, 7) en position de butée basse (P1) pour les recettes Expresso et en position de butée haute (P2) pour les recettes Café.

5. Machine (1) selon l'une des revendications 3 ou 4, dans laquelle l'unité de commande est configurée pour réaliser des recettes préférentielles auxquelles correspondent des positions de réglage de l'espacement des meules (6, 7) définies par l'utilisateur, ladite unité de commande étant configurée pour commander par défaut le dispositif de réglage de sorte à régler l'espacement des meules dans lesdites positions définies.

6. Machine (1) selon l'une des revendications 1 à 5, dans laquelle le système de transmission (13) comprend une vis sans fin (14) entraînée en rotation par le moteur (12), une roue (15) dentée engrenant avec la vis sans fin et entraînant en rotation une couronne externe (16) qui reçoit une couronne interne (19) assujettie à la meule (7) mobile en translation, lesdites couronnes étant configurées pour que la rotation de la vis sans fin génère la translation de la couronne interne le long de la couronne externe.

7. Machine (1) selon l'une des revendications 1 à 6, dans laquelle les positions de butée basse (P1) et haute (P2) sont constituées par deux butées mécaniques (20, 21) venant en contact sur au moins un élément de blocage (22) dans lesdites positions, le dispositif de réglage (11) comprenant un système de mesure du courant d'alimentation du moteur, le module de gestion étant configuré pour détecter les positions de butée basse et haute lorsqu'un pic de courant est mesuré par le système de mesure et en fonction de la polarité du courant.

8. Machine (1) selon l'une des revendications 1 à 7, dans laquelle les au moins deux positions intermédiaires (P3, P4) sont définies par une segmentation constante de la durée totale de déplacement de la position de butée basse (P1) à la position de butée haute (P2).

9. Machine (1) selon l'une des revendications 1 à 8, laquelle comprend uniquement deux positions intermédiaires (P3, P4).

10. Machine (1) selon la revendication 9 rattachée aux revendications 8 et 2, dans laquelle le moteur (12) est alimenté pendant un temps de l'ordre d'une demi-seconde pour un déplacement de la position de butée basse (P1) ou haute (P2) jusqu'à la position intermédiaire (P3, P4) à atteindre au final.

11. Machine (1) selon l'une des revendications 8 à 10, dans laquelle le module de gestion intègre une séquence d'apprentissage du temps d'alimentation (Ta) du moteur entre deux positions successives, ledit temps d'alimentation (Ta) étant égal au temps de déplacement (Tp) entre la position de butée basse (P1) et la position de butée haute (P2) que divise le nombre total (N) de positions intermédiaires (P3, P4) auquel on ajoute un [Ta=Tp/(N+1)].

12. Machine (1) selon la revendication 11, dans laquelle le module de gestion est configuré pour lancer la séquence d'apprentissage selon un cadencement programmé.

## Patentansprüche

1. Automatische Kaffeemaschine (1), umfassend eine Mühle (5), die zwei gegeneinander drehbaren Mahlscheiben (6, 7) aufweist, und einer Einstellvorrichtung (11) für den Abstand zwischen beiden Mahlscheiben, die einen umkehrbaren Motor (12) und ein Getriebesystem (13) aufweist, das so konfiguriert ist, eine (7) der Mahlscheiben unter der Wirkung des Motors in eine oder eine andere Richtung von einer unteren Anschlagstellung (P1), die dem minimalen Abstand der Mahlscheiben entspricht, zu einer oberen Anschlagstellung (P2) zu verschieben, die dem maximalen Abstand der Mahlscheiben entspricht, **dadurch gekennzeichnet, dass** die Einstellvorrichtung konfiguriert ist, den Abstand der Mahlscheiben in mindestens zwei Zwischenstellungen (P3, P4) einzustellen, wobei die Einstellvorrichtung (11) ein Verwaltungsmodul umfasst, das konfiguriert ist, um den Motor (12) zu versorgen, bis eine von der unteren (P1) oder der oberen (P2) Anschlagstellung erreicht ist, und dann den Motor für eine vorbestimmte Zeit zu versorgen, was es ermöglicht, eine von zwei Zwischenstellungen (P3, P4) zu erreichen, die von dem Benutzer ausgewählt ist.

2. Maschine (1) nach Anspruch 1, wobei das Verwaltungsmodul so konfiguriert ist, dass während der Einstellung der Mahlscheiben (6, 7) von einer Zwischenstellung (P3, P4) zu einer anderen Zwischenstellung (P4, P3), die von dem Benutzer ausgewählt ist, der Motor (12) versorgt wird, um die untere (P1) oder obere (P2) Anschlagstellung zu erreichen, die der zu erreichenden Zwischenstellung (P3, P4) am nächsten liegt.

3. Maschine (1) nach einem der Ansprüche 1 oder 2, die eine elektronische Steuereinheit umfasst, die konfiguriert ist, um die Einstellvorrichtung (11) und ihr Verwaltungsmodul zu steuern.

4. Maschine (1) nach Anspruch 3, wobei die Steuereinheit zum Ausführen von Espresso-Rezepten und Kaffeerezepten konfiguriert ist, wobei die Einstellvorrichtung (11) den Abstand der Mahlscheiben (6, 7) standardmäßig in die untere Anschlagstellung (P1) für Espresso-Rezepte und die obere Anschlagstellung (P2) für Kaffeerezepte einstellt.

5. Maschine (1) nach einem der Ansprüche 3 oder 4, wobei die Steuereinheit konfiguriert ist, bevorzugte Rezepte zu realisieren, denen von dem Benutzer definierte Stellungen zum Einstellen des Abstands von Mahlscheiben (6, 7) entsprechen, wobei die Steuereinheit so konfiguriert ist, dass sie standardmäßig die Einstellvorrichtung steuert, um den Abstand der Mahlscheiben in den definierten Stellungen einzustellen.

6. Maschine (1) nach einem der Ansprüche 1 bis 5, wobei das Getriebesystem (13) eine Schnecke (14) umfasst, die von dem Motor (12) in Drehung versetzt wird, und wobei ein Zahnrad (15) mit der Schnecke kämmt und eine äußere Krone (16) in Drehung versetzt, die eine innere Krone (19) aufnimmt, die an dem Mahlscheibe (7) translationsbeweglich befestigt ist, wobei die Kronen so konfiguriert sind, dass die Drehung der Schnecke die Verschiebung der inneren Krone entlang der äußeren Krone erzeugt.

7. Maschine (1) nach einem der Ansprüche 1 bis 6, wobei die untere (P1) und obere (P2) Anschlagstellung aus zwei mechanischen Anschlägen (20, 21) bestehen, die an mindestens einem Blockierelement (22) in diesen Stellungen in Kontakt kommen, wobei die Einstellvorrichtung (11) ein System zum Messen des Versorgungsstroms des Motors umfasst, wobei das Verwaltungsmodul konfiguriert ist, die unteren und oberen Anschlagstellungen zu erfassen, wenn ein Spitzenstrom durch das Messsystem und als Funktion der Polarität des Stroms gemessen wird.

8. Maschine (1) nach einem der Ansprüche 1 bis 7, wobei die mindestens zwei Zwischenstellungen (P3, P4) durch eine konstante Segmentierung der Gesamtzeit der Bewegung von der unteren Anschlagstellung (P1) zu der oberen Anschlagstellung (P2) definiert sind.

9. Maschine (1) nach einem der Ansprüche 1 bis 8, die nur zwei Zwischenstellungen (P3, P4) umfasst.

10. Maschine (1) nach Anspruch 9, der von den Ansprüchen 8 und 2 abhängig ist, wobei der Motor (12) für eine Zeit von ungefähr einer halben Sekunde für eine Bewegung der unteren (P1) oder oberen (P2) Anschlagstellung bis zu der am Ende zu erreichenden Zwischenstellung (P3, P4) versorgt wird.

11. Maschine (1) nach einem der Ansprüche 8 bis 10, wobei das Verwaltungsmodul eine Lernsequenz der Versorgungszeit (Ta) des Motors zwischen zwei aufeinanderfolgenden Stellungen integriert, wobei die Versorgungszeit (Ta) gleich der Zeit (Tp) der Bewegung zwischen der unteren Anschlagstellung (P1) und der oberen Anschlagstellung (P2) geteilt durch die Gesamtzahl (N) der Zwischenstellungen (P3, P4) ist, zu der ein [Ta = Tp / (N + 1)] hinzugefügt wird.

12. Maschine (1) nach Anspruch 11, wobei das Verwaltungsmodul konfiguriert ist, um die Lernsequenz gemäß einem programmierten Takt zu starten.

## Claims

1. Automatic coffee machine (1) comprising a grinder (5) comprising two grinders (6, 7) one of which is mobile in rotation with respect to the other, a device for adjusting (11) the spacing between the two grinders comprising a reversible motor (12) and a transmission system (13) configured to translate one (7) of the grinders in one direction or in the other under the action of the motor from a low abutment position (P1) corresponding to the minimum spacing of the grinders to a high abutment position (P2) corresponding to the maximum spacing of the grinders, **characterised in that** the adjustment device is configured to adjust the spacing of said grinders according to at least two intermediate positions (P3, P4), said adjustment device (11) comprising a management module configured to supply the motor (12) until reaching one of the low (P1) or high (P2) abutment positions, then to supply the motor for a determined time, making it possible to reach one of the two intermediate positions (P3, P4) selected by the user.

2. Machine (1) according to claim 1, wherein the management module is configured such that, during an adjustment of the grinders (6, 7) from an intermediate position (P3, P4) to another intermediate position (P4, P3) selected by the user, the motor (12) is supplied to reach the low (P1) or high (P2) abutment position the closest to the intermediate position (P3, P4) to be reached.

3. Machine (1) according to one of claims 1 or 2, which comprises an electronic control unit configured to control the adjustment device (11) and the management module thereof.

4. Machine (1) according to claim 3, wherein the control unit is configured to perform Espresso recipes and Coffee recipes, the adjustment device (11) by default, adjusting the spacing of the grinders (6, 7) in the low abutment position (P1) for Espresso recipes and in the high abutment position (P2) for Coffee recipes.

5. Machine (1) according to one of claims 3 or 4, wherein the control unit is configured to perform preferable recipes, to which positions for adjusting the spacing of the grinders (6, 7) defined by the user correspond, said control unit being configured to control, by default, the adjustment device so as to adjust the spacing of the grinders in said defined positions.

6. Machine (1) according to one of claims 1 to 5, wherein the transmission system (13) comprises a worm screw (14) driven in rotation by the motor (12), a sprocket (15) meshing with the worm screw and driving in rotation an outer ring (16) which receives an inner ring (19) subservient to the grinder (7) mobile in translation, said rings being configured such that the rotation of the worm screw generates the translation of the inner ring along the outer ring.

7. Machine (1) according to one of claims 1 to 6, wherein the low (P1) and high (P2) abutment positions are constituted by two mechanical abutments (20, 21) coming into contact on at least one blocking element (22) in said positions, the adjustment device (11) comprising a system for measuring the supply current of the motor, the management module being configure to detect the low and high abutment positions when a current peak is measured by the measuring system and according to the polarity of the current.

8. Machine (1) according to one of claims 1 to 7, wherein the at least two intermediate positions (P3, P4) are defined by a constant segmentation of the total duration of moving from the low abutment position (P1) to the high abutment position (P2).

9. Machine (1) according to one of claims 1 to 8, which only comprises two intermediate positions (P3, P4).

10. Machine (1) according to claim 9, attached to claims 8 and 2, wherein the motor (12) is supplied for a time of around one half-second for a movement from the low (P1) or high (P2) abutment position to the intermediate position (P3, P4) to ultimately be reached.

11. Machine (1) according to one of claims 8 to 10, wherein the management module integrates a sequence of learning the supply time (Ta) of the motor between two successive positions, said supply time (Ta) being equal to the time for moving (Tp) between the low abutment position (P1) and the high abutment position (P2) that divides the total number (N) of intermediate positions (P3, P4) to which one is added [Ta=Tp/(N+1)].

12. Machine (1) according to claim 11, wherein the management module is configured to start the learning sequence according to a programmed timing.
